# FASCICULE DE BREVET EUROPEEN

(11) **EP 0 526 579 B1**
(45) Date de publication et mention de la délivrance du brevet: **12.06.1996**
(21) Numéro de dépôt: 91909499.5
(22) Date de dépôt: 25.04.1991
(51) Int. Cl.: F01K 15/04, B63G 8/10

(54) **GENERATEUR AUTONOME D'ENERGIE THERMIQUE ET MODULE ENERGETIQUE SOUS-MARIN COMPRENANT UN TEL GENERATEUR**
AUTONOMER THERMISCHE ENERGIE ERZEUGER UND ENERGIEMODUL FÜR UNTERSEEBOOTE MIT SOLCHEM ERZEUGER
SELF-CONTAINED THERMAL ENERGY GENERATOR AND SUBSEA ENERGY MODULE INCLUDING SAID GENERATOR

(30) Priorité: 26.04.1990 FR 9005315
(43) Date de publication de la demande: 10.02.1993
(73) Titulaire: BERTIN & CIE SOCIETE ANONYME, F-78373 Plaisir Cédex (FR)
(72) Inventeur: BOY-MARCOTTE, Jean-Louis, F-91400 Orsay (FR); DANCETTE, Michel, F-78570 Andrésy (FR); MULET, Jean-Charles, F-40220 Tarnos (FR); LEONARD, Claude, F-64100 Bayonne (FR)
(74) Mandataire: Colas, Jean-Pierre
(86) Numéro de dépôt international: FR9100344
(87) Numéro de publication internationale: WO9116526

(56) Documents cités:
- EP-A- 0 143 728
- DE-A- 3 225 923
- FR-A- 2 118 343
- FR-A- 2 624 200
- US-A- 3 077 737
- US-A- 3 559 402

## Description

La présente invention est relative à un générateur autonome d'énergie thermique et, plus particulièrement, à un module énergétique comprenant un tel générateur et conçu pour équiper un véhicule sous-marin.

On connaît de US-A-3 077 737 un générateur d'énergie thermique comprenant une chambre de combustion alimentée par des réservoirs de carburant et de comburant et un échangeur de chaleur traversé par les gaz d'échappement de la chambre pour vaporiser un fluide de travail alimentant une machine thermique.

On connaît aussi de US-A- 3 559 402 un moteur Diesel à cycle fermé comprenant un condenseur refroidi par une circulation de comburant (de l'oxygène liquide) pour la condensation du gaz carbonique contenu dans les gaz d'échappement.

On décrit au brevet français No. 2 537 206 déposé par la demanderesse, une installation de production d'énergie thermique conçue pour fonctionner en cycle fermé, sans échange d'air avec l'extérieur, par exemple dans un milieu sous-marin. L'installation comprend une boucle de production de chaleur et une machine thermique à cycle de Rankine qui reçoit de la chaleur produite dans la boucle par l'intermédiaire d'un échangeur où se vaporise un fluide de travail actionnant une turbine couplée mécaniquement à un alternateur, par exemple.

Un carburant et un comburant alimentent une chambre de combustion de laquelle sortént principalement de la vapeur d'eau et du gaz carbonique, à une pression élevée, qui traversent ensuite l'échangeur pour chauffer le fluide de travail et sont finalement condensés à la sortie de l'échangeur et stockés dans un réservoir.

L'énergie massique d'une telle installation est élevée et propre à assurer l'alimentation d'un véhicule sous-marin. Grâce à la pression élevée (environ 60 bars) des gaz de combustion de la boucle de production de chaleur, il est possible d'assurer la condensation non seulement de l'eau mais également du gaz carbonique, en utilisant comme réfrigérant de l'eau de mer à 10°C environ. Cette condensation de la vapeur comme du gaz carbonique évite tout rejet de gaz dans l'eau, rejet que l'on souhaite éviter pour les véhicules sous-marins car l'éjection de bulles de gaz détruit la "pesée", c'est-à-dire l'équilibre hydrostatique du véhicule.

Cependant, à la pression d'environ 60 bars des gaz de combustion, la condensation du gaz carbonique par l'utilisation d'eau de mer comme réfrigérant cesse d'être possible si la température de cette eau dépasse 10° environ. Dans les mers relativement chaudes, l'installation décrite ci-dessus ne permet plus la condensation du gaz carbonique et donc la suppression de rejets gazeux, alors qu'il n'est pas possible non plus de conserver ceux-ci dans le véhicule du fait de l'encombrement des réservoirs nécessaires.

La présente invention a donc pour but de réaliser un générateur autonome d'énergie thermique qui ne présente pas cet inconvénient et qui fonctionne par conséquent sans rejets gazeux y compris dans des eaux chaudes ou relativement chaudes.

On atteint ce but de l'invention, ainsi que d'autres qui apparaîtront dans la suite de la présente description, avec un générateur autonome d'énergie thermique du type comprenant des réservoirs de carburant et de comburant, une chambre de combustion alimentée par ces réservoirs pour produire des gaz de combustion à pression élevée constitués essentiellement de vapeur d'eau et de gaz carbonique, un échangeur de chaleur traversé par ces gaz pour vaporiser un fluide de travail alimentant une machine thermique, des moyens de condensation des gaz de combustion sortant de l'échangeur et des réservoirs de stockage des produits de condensation. Suivant l'invention, les moyens de condensation comprennent des premier et deuxième condenseurs-séparateurs agissant sélectivement sur la vapeur d'eau et le gaz carbonique respectivement, un réservoir de comburant sous pression alimentant le deuxième condenseur-séparateur qui assure la condensation du gaz carbonique et la détente du comburant, le comburant détendu alimentant la chambre de combustion, l'échangeur de chaleur et les premier et deuxième condenseurs étant traversés en cascade dans cet ordre par un courant de gaz de combustion à pression élevée.

La condensation et la séparation sélective des produits de combustion ainsi opérées permettent, suivant une caractéristique avantageuse de la présente invention, le stockage d'un des produits de combustion avec le carburant ou le comburant, quand il y a compatibilité des caractéristiques de stockage, dans un même réservoir à deux compartiments isolés l'un de l'autre par une cloison mobile. On gagne ainsi en volume et en poids des moyens de stockage.

Suivant un mode de réalisation de l'invention, le comburant utilisé est de l'oxygène liquide et non gazeux comme dans l'installation du brevet précité. En faisant passer l'oxygène liquide venu du réservoir dans un condenseur-séparateur où il sert avantageusement de réfrigérant pour la condensation du gaz carbonique, on assure simultanément la vaporisation dans ce condenseur de l'oxygène liquide, nécessaire à l'alimentation de la chambre de combustion. La liquéfaction du gaz carbonique et son stockage dans un réservoir permet d'éviter tout rejet gazeux, y compris dans les mers où la température de l'eau est trop élevée pour assurer la condensation du gaz carbonique à la pression fixée pour ce gaz dans le générateur.

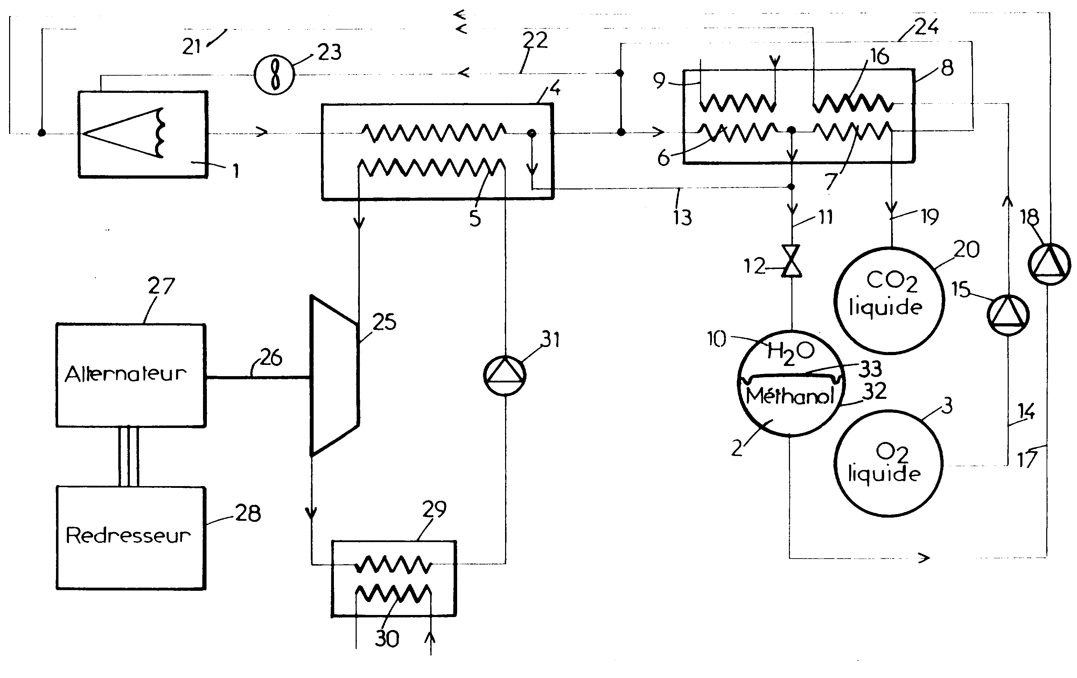

D'autres caractéristiques et avantages du générateur suivant la présente invention apparaîtront à la lecture de la description qui va suivre et à l'examen du dessin annexé dans lequel la figure unique représente un schéma d'un module énergétique sous-marin équipé de ce générateur.

Sur ce dessin, il apparaît que le générateur comprend essentiellement une chambre de combustion 1 alimentée par un réservoir 2 de carburant, du méthanol par exemple, et un réservoir 3 de comburant qui, dans la présente invention, peut être par exemple de l'oxygène liquide. La combustion est réglée de manière que les gaz de combustion sortent de la chambre 1 à une pression élevée, qui peut être fixée à 60 bars, par exemple. Les gaz de combustion passent dans un échangeur 4 où ils vaporisent un fluide de travail circulant dans une tubulure 5 pour animer une machine thermique délivrant de l'énergie mécanique. Cette machine sera décrite dans la suite en plus de détail.

La combustion du méthanol dans la chambre 1 est classiquement réalisée avec un excès d'oxygène pour assurer une combustion complète. Il s'ensuit que les gaz de combustion comprennent essentiellement du gaz carbonique, de la vapeur d'eau et l'excès d'oxygène gazeux.

La vapeur d'eau et le gaz carbonique sortant de l'échangeur 4 sont condensés et séparés par passage dans des premier et deuxième condenseurs-séparateurs 6 et 7 respectivement, éventuellement réunis dans un condenseur double 8 comme schématisé au dessin. Une circulation d'eau de mer dans une tubulure 9 assure la réfrigération du condenseur 6 et suffit en toute circonstance pour assurer la liquéfaction de la vapeur d'eau préssurisée contenue dans les gaz de combustion. L'eau ainsi condensée peut être stockée dans un réservoir 10 connecté au condenseur 6 par un conduit 11 équipé d'une vanne 12. Ce réservoir récupère également, par un conduit 13, de l'eau éventuellement condensée dans l'échangeur 4.

Suivant la présente invention, on combine les réservoirs 2 et 10 en un réservoir 32 à deux compartiments séparés par une cloison mobile 33. Ainsi, au fur et à mesure de la combustion du carburant contenu dans le compartiment 2 du réservoir 32, la cloison 33 se déplace pour dégager un volume d'accueil croissant pour l'eau condensée reçue dans le compartiment 10. Cette "récupération" d'un volume de stockage pour l'eau permet avantageusement de diminuer le volume et le poids des réservoirs qui équipent le générateur suivant l'invention. On remarquera que ces avantages sont rendus possible par le fait que l'eau et le méthanol sont tous deux stockables sous forme liquide à la température et à la pression ambiantes.

Les gaz de combustion qui sortent du condenseur 6 contiennent essentiellement du gaz carbonique et l'oxygène en excès venu de la chambre de combustion. Ces gaz passent dans le condenseur 7 qui, suivant une caractéristique essentielle de la présente invention, est réfrigéré par une circulation d'oxygène liquide en provenance du réservoir 3. Ce réservoir est connecté au condenseur 7 par un conduit 14 équipé d'une pompe 15 pour alimenter une tubulure 16 du condenseur. Incidemment, on notera que l'alimentation en méthanol de la chambre 1 est assurée par un conduit 17 équipé d'une pompe 18.

La température de l'oxygène liquide étant de -180°C environ, on comprend que le gaz carbonique préssurisé passant dans l'échangeur 7 est énergiquement refroidi, ce qui garantit sa condensation. Un conduit 19 permet d'envoyer le gaz ainsi condensé dans un réservoir 20. Simultanément à la condensation du gaz carbonique, l'oxygène liquide passant dans l'échangeur se vaporise, la chaleur de vaporisation nécessaire étant alors fournie par le gaz carbonique. Un conduit 21 ramène l'oxygène gazeux ainsi obtenu à l'entrée de la chambre de combustion 1.

Ainsi assure-t-on, suivant la présente invention, à la fois l'alimentation en oxygène gazeux de cette chambre et la condensation du gaz carbonique contenu dans les gaz de combustion, grâce à une source unique d'oxygène liquide, notamment dans des eaux dont la température est trop élevée pour assurer la condensation de ce gaz carbonique.

Pour limiter la température atteinte dans la chambre de combustion, on assure une dilution du carburant et du comburant dans cette chambre par une injection de gaz carbonique prélevé sur les gaz de combustion. A cet effet, une ligne 22 équipée d'un ventilateur 23 soutire du gaz carbonique à la sortie de l'échangeur 4 pour le ramener dans la chambre 1.

A la sortie du double condenseur 8, on retrouve essentiellement l'oxygène en excès non brûlé dans la chambre de combustion et, éventuellement, des résidus non condensés autre que vapeur d'eau et gaz carbonique. Une ligne 24 renvoie alors la sortie du double condenseur 8 dans la chambre de combustion, par l'intermédiaire de la ligne 22, l'oxygène en excès étant ainsi recyclé dans le mélange à brûler.

Le générateur d'énergie thermique suivant l'invention décrit ci-dessus est autonome en ce sens qu'il fonctionne en vase clos, c'est-à-dire sans échange de masse avec son environnement. La vapeur d'eau et le gaz carbonique des gaz de combustion peuvent, après liquéfaction, être conservés en réservoirs dont la capacité fixe l'autonomie maximale à moins que l'on décide la décharge ou la vidange de ceux-ci. En fait, et cela est essentiel, la capacité du générateur à liquéfier le gaz carbonique n'est plus limitée par la température des eaux dans lesquelles se déplace un véhicule sous-marin équipé d'un tel générateur.

En outre, l'utilisation suivant l'invention d'un réservoir à deux compartiments et cloison séparatrice mobile permet, comme on l'a vu plus haut, de gagner en poids et en volume en tirant parti du fait que l'eau et le méthanol peuvent être conservés tous les deux sous forme liquide à la température et à la pression ambiantes.

Le générateur fait partie d'un module énergétique sous-marin complété par une machine thermique propre à convertir l'énergie thermique fournie par le générateur en énergie mécanique. Sur la figure unique du dessin annexé, on a schématisé une telle machine fonctionnant,- à titre d'exemple seulement, suivant le cycle de Rankine.

La machine comprend essentiellement une turbine 25 montée sur un arbre 26 pour entraîner un alternateur 27 propre à charger des batteries électriques (non représentées), à travers un redresseur 28. Un fluide de travail circulant dans la tubulure 5 de l'échangeur 4 passe dans la turbine 25 et sort de celle-ci pour passer dans un condenseur 29 où il est condensé à l'aide d'eau de mer passant dans une tubulure 30, le fluide ainsi condensé étant propulsé par une pompe 31 dans la tubulure 5 de l'échangeur 4 en vue d'un recyclage. Toutes ces dispositions sont classiques et n'exigent pas une description plus détaillée.

Le fluide de travail peut être de la vapeur d'eau et, dans ce cas, la présence d'une turbine à vapeur d'eau dans le module énergétique est un gage de fiabilité du module, essentielle en milieu sous-marin. Le couplage d'une telle turbine à un alternateur rapide, tournant par exemple à 12.000 tours/minute favorise la compacité de l'installation.

A titre d'exemple, l'invention permet de réaliser un générateur d'énergie thermique d'une puissance de 800 kW , avec une pression de 60 bars dans la chambre de combustion et une température de 700° dans cette chambre. La machine thermique couplée à ce générateur fonctionne alors avec de la vapeur d'eau à 20 bars et 500°C. On observera que ces niveaux de température et de pression dans le générateur et dans la machine sont relativement modérés.

On observe de surcroît que si la pression dans la boucle de génération d'énergie thermique est fixée par les conditions de travail en immersion, le cycle des pressions dans la boucle "machine thermique" peut être fixé indépendamment de la pression dans le générateur comme de la pression d'immersion afin d'optimiser les conditions de fonctionnement de la machine thermique.

On constitue ainsi un module énergétique d'un poids de quelques tonnes fournissant une énergie massique de 200 à 300 Wh électriques par kilo environ.

Un véhicule sous-marin équipé d'un tel module présente ainsi notamment une grande fiabilité du point de vue maintenance du fait de la combustion continue utilisée (pas de moteur Diesel), de la présence d'une machine tournante sans réducteur, de l'absence de compresseur pour traiter les rejets et de moyen pour éviter ces derniers, et donc d'adjoindre les ballasts et chasses nécessaires.

Bien entendu l'invention n'est pas limitée au mode de réalisation décrit et représenté qui n'a été donné qu'à titre d'exemple. Ainsi, l'invention pourrait être adaptée à un module utilisant des carburants autres que ceux mentionnés plus haut. De même, le couplage du générateur suivant l'invention à une machine thermique à cycle de Rankine n'est pas exclusif de l'utilisation d'autres machines susceptibles d'utiliser l'énergie fournie par le générateur.

## Revendications

1. Générateur autonome d'énergie thermique, du type comprenant des réservoirs (2, 3) de carburant et d'oxygène liquide, une chambre de combustion (1) alimentée par ces réservoirs pour produire des gaz de combustion à pression élevée constitués essentiellement de vapeur d'eau et de gaz carbonique, un échangeur de chaleur (4) traversé par ces gaz pour vaporiser un fluide de travail alimentant une machine thermique, des moyens de condensation des gaz de combustion sortant de l'échangeur et des réservoirs de stockage des produits de condensation, caractérisé en ce que les moyens de condensation comprennent des premier (6) et deuxième (7) condenseurs-séparateurs agissant sélectivement sur la vapeur d'eau puis sur le gaz carbonique, respectivement, le réservoir d'oxygène liquide sous pression (3) alimentant le deuxième condenseur-séparateur (7) qui assure la condensation du gaz carbonique et la détente du comburant, le comburant détendu alimentant la chambre de combustion (1), l'échangeur de chaleur (4) et les premier (6) et deuxième (7) condenseurs étant traversés en cascade dans cet ordre par un courant de gaz de combustion à pression élevée.

2. Générateur conforme à la revendication 1, caractérisé en ce que le carburant ou l'oxygène liquide est stocké avec l'un des produits de combustion séparés et présentant des caractéristiques de stockage compatibles, dans un même réservoir (32) à deux compartiments (2, 10) isolés l'un de l'autre par une cloison mobile (33).

3. Générateur conforme à la revendication 2, caractérisé en ce que les produits contenus dans lesdits compartiments (2, 10) sont liquides à la température et à la pression ambiantes.

4. Générateur conforme à la revendication 3, caractérisé en ce que la pression de fonctionnement dans la chambre de combustion est réglée à 60 bars environ.

5. Générateur conforme à l'une quelconque des revendications 1 à 4, caractérisé en ce qu'il comprend des moyens (22, 23) pour réinjecter dans la chambre de combustion (1) du gaz carbonique prélevé dans les gaz de combustion, en aval de l'échangeur (4), pour assurer une dilution prédéterminée des gaz contenus dans cette chambre de combustion (1).

6. Générateur conforme à l'une quelconque des revendications 3 à 5, caractérisé en ce qu'il comprend des moyens (24) pour recycler les gaz résiduels non condensés dans les condenseurs (6) et (7).

7. Générateur conforme à la revendication 6, caractérisé en ce que ces gaz résiduels contiennent de l'oxygène en excès non brûlé dans la chambre de combustion (1).

8. Générateur conforme à la revendication 6, caractérisé en ce que les moyens de recyclage (24) sont constitués par un conduit (24) raccordé, à une extrémité, à la sortie de l'ensemble (8) des condenseurs-séparateurs (6) et (7) et, à l'autre extrémité, à un conduit (22) assurant l'injection de gaz carbonique prélevé dans les gaz de combustion, dans la chambre de combustion (11).

9. Générateur conforme à l'une quelconque des revendications 2 à 8, caractérisé en ce qu'il comprend un compartiment (10) de réservoir pour rassembler l'eau résultant de la condensation dans le premier condenseur-séparateur (6) de la vapeur d'eau contenue dans les gaz de combustion, un conduit (13) étant prévu pour envoyer aussi dans ce compartiment (10) la vapeur d'eau condensée dans l'échangeur (4).

10. Générateur conforme à l'une quelconque des revendications précédentes, caractérisé en ce que le carburant utilisé est du méthanol.

11. Module énergétique sous-marin comprenant une machine thermique pour transformer une énergie thermique en énergie mécanique et un générateur d'énergie thermique alimentant cette machine, caractérisé en ce que ce générateur est conforme à l'une quelconque des revendications 1 à 10.

12. Module conforme à la revendication 11, caractérisé en ce que la machine thermique fonctionne suivant le cycle de Rankine.

## Patentansprüche

1. Autonomer Erzeuger von thermischer Energie mit Speichern (2, 3) für Treibstoff und flüssigen Sauerstoff, einer Brennkammer (1), die von den Speichern versorgt wird, um unter erhöhtem Druck stehende Verbrennungsgase zu erzeugen, die im wesentlichen aus Wasserdampf und Kohlendioxid bestehen, einem Wärmetauscher (4), der von den Gasen durchströmt wird, um ein eine Wärmekraftmaschine versorgendes Arbeitsmittel zu verdampfen, Kondensationseinrichtungen für die den Wärmetauscher verlassenden Verbrennungsgase und Speicher zum Aufbewahren der Kondensationsprodukte, dadurch gekennzeichnet, daß die Kondensationseinrichtungen einen ersten (6) und zweiten (7) Kondensator-Abscheider aufweisen, die selektiv auf den Wasserdampf und das Kohlendioxid einwirken, daß der Speicher (3) für den unter Druck stehenden flüssigen Sauerstoff den zweiten Kondensator-Abscheider (7) versorgt, der die Kondensation des Kohlendioxids und die Entspannung des Sauerstoffträgers sicherstellt, daß der entspannte Sauerstoffträger die Brennkammer (1) versorgt und daß der Wärmetauscher (4) und der erste (6) und zweite (7) Kondensator kaskadenförmig in dieser Reihenfolge von einem Strom der unter erhöhtem Druck stehenden Verbrennungsgase durchströmt werden.

2. Erzeuger nach Anspruch 1, dadurch gekennzeichnet, daß der Treibstoff oder der flüssige Sauerstoff mit einem der abgetrennten und kompatible Lagereigenschaften aufweisenden Verbrennungsprodukte im gleichen Speicher (32) mit zwei Abteilen (2, 10), die voneinander über eine mobile Trennwand (33) isoliert sind, aufbewahrt wird.

3. Erzeuger nach Anspruch 2, dadurch gekennzeichnet, daß die in den Abteilen (2, 10) enthaltenen Produkte bei Umgebungstemperatur und Umgebungsdruck flüssig sind.

4. Erzeuger nach Anspruch 3, dadurch gekennzeichnet, daß der Arbeitsdruck in der Brennkammer auf etwa 60 bar geregelt ist.

5. Erzeuger nach einem der Ansprüche 1 bis 4, dadurch gekennzeichnet, daß er Einrichtungen (22, 23) zum Wiedereinführen von den Verbrennungsgasen entnommenem Kohlendioxid in die Brennkammer (1) stromab des Wärmetauschers (4) aufweist, um eine vorgegebene Verdünnung der in der Brennkammer (1) enthaltenen Gase sicherzustellen.

6. Erzeuger nach einem der Ansprüche 3 bis 5, dadurch gekennzeichnet, daß er Einrichtungen (24) zum Rezyklieren der in den Kondensatoren (6) und (7) nicht kondensierten Restgase aufweist.

7. Erzeuger nach Anspruch 6, dadurch gekennzeichnet, daß die Restgase überschüssigen Sauerstoff enthalten, der in der Brennkammer (1) nicht verbrannt wurde.

8. Erzeuger nach Anspruch 6, dadurch gekennzeichnet, daß die Einrichtungen (24) zum Rezyklieren von einer Leitung (24) gebildet sind, die an einem Ende an den Ausgang der Einheit (8) aus den Kondensator-Abscheidern (6) und (7) und am anderen Ende an eine Leitung (22) angeschlossen ist, die die Einführung des den Verbrennungsgasen entnommenen Kohlendioxids in die Brennkammer (1) sicherstellt.

9. Erzeuger nach einem der Ansprüche 2 bis 8, dadurch gekennzeichnet, daß er ein Speicherabteil (10) zum Sammeln von Wasser aufweist, das aus der Kondensation des in den Verbrennungsgasen enthaltenen Wasserdampfes im ersten Kondensator-Abscheider (6) resultiert, und daß eine Leitung (13) vorgesehen ist, um auch den im Wärmetauscher (4) kondensierten Wasserdampf in das Abteil (10) zu leiten.

10. Erzeuger nach einem der vorangehenden Ansprüche, dadurch gekennzeichnet, daß der verwendete Treibstoff Methanol ist.

11. Energiemodul für Unterseeboote umfassend eine Wärmekraftmaschine zum Umformen von thermischer Energie in mechanische Energie und einen Erzeuger von thermischer Energie, der diese Maschine versorgt, dadurch gekennzeichnet, daß der Erzeuger gemäß einem der Patentansprüche 1 bis 10 ausgebildet ist.

12. Energiemodul nach Anspruch 11, dadurch gekennzeichnet, daß die Wärmekraftmaschine gemäß dem Zyklus von Rankine funktioniert.

## Claims

1. Self-contained heat energy generator, of the type comprising fuel and liquid oxygen tanks (2, 3), a combustion chamber (1) supplied by these tanks in order to produce high-pressure combustion gases essentially consisting of steam and carbon dioxide, a heat exchanger (4) passed through by these gases in order to vaporise a working fluid supplying a heat engine, means for condensing the combustion gases leaving the exchanger and tanks for storing the condensation products, characterised in that the condensation means comprise first (6) and second (7) condenser/separators acting selectively on the steam then on the carbon dioxide, respectively, the pressurised liquid oxygen tank (3) supplying the second condenser/separator (7) which ensures condensation of the carbon dioxide and reduction of the pressure of the oxidiser, the reduced-pressure oxidiser supplying the combustion chamber (1), the heat exchanger (4) and the first (6) and second (7) condensers being passed through in cascade in this order by a high-pressure flow of combustion gas.

2. Generator according to Claim 1, characterised in that the fuel or the liquid oxygen is stored with one of the separated combustion products having compatible storage properties, in the same tank (32) with two compartments (2, 10) isolated from each other by a movable partition (33).

3. Generator according to Claim 2, characterised in that the products contained in the said compartments (2, 10) are liquid at ambient temperature and pressure.

4. Generator according to Claim 3, characterised in that the operating pressure in the combustion chamber is regulated to approximately 60 bar.

5. Generator according to any one of Claims 1 to 4, characterised in that it comprises means (22, 23) for reinjecting into the combustion chamber (1) carbon dioxide taken from the combustion gases, downstream from the exchanger (4), in order to ensure predetermined diluting of the gases contained in this combustion chamber (1).

6. Generator according to any one of Claims 3 to 5, characterised in that it comprises means (24) for recycling the residual gases not condensed in the condensers (6) and (7).

7. Generator according to Claim 6, characterised in that the residual gases contain excess oxygen not burnt in the combustion chamber (1).

8. Generator according to Claim 7, characterised in that the recycling means (24) consist of a pipe (24) connected, at one end, to the outlet of the assembly (8) of the condenser/separators (6) and (7) and, at the other end, to a pipe (22) ensuring injection of the carbon dioxide taken from the combustion gases, into the combustion chamber (11).

9. Generator according to any one of Claims 2 to 8, characterised in that it comprises a tank compartment (10) for collecting the water resulting from the condensation in the first condenser/separator (6) of the steam contained in the combustion gases, a pipe (13) being provided in order to convey the steam condensed in the exchanger (4) also into this compartment (10).

10. Generator according to any one of the preceding claims, characterised in that the fuel used is methanol.

11. Submarine energy module comprising a heat engine for transforming heat energy into mechanical energy and a heat energy generator supplying this machine, characterised in that the generator is in accordance with any one of Claims 1 to 10.

12. Module according to Claim 11, characterised in that the heat engine operates according to the Rankine cycle.
